(19) Europäisches Patentamt
European Patent Office
Office européen des brevets

(11) **EP 3 156 210 A1**

(12) **EUROPÄISCHE PATENTANMELDUNG**

(43) Veröffentlichungstag:
**19.04.2017 Patentblatt 2017/16**

(51) Int Cl.:
***B29C 65/00*** *(2006.01)*    ***C08J 5/12*** *(2006.01)*

(21) Anmeldenummer: **15190205.3**

(22) Anmeldetag: **16.10.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Henkel AG & Co. KGaA**
**40589 Düsseldorf (DE)**

(72) Erfinder:
- **HAMM, Marc**
**40229 Düsseldorf (DE)**
- **WALTER, Pablo**
**80801 München (DE)**
- **KASPER, Dirk**
**40597 Düsseldorf (DE)**

(54) **VERFAHREN ZUM SCHWEISSEN ZWEIER UNTERSCHIEDLICHER KUNSTSTOFFE**

(57)    Die vorliegende Erfindung bezieht sich auf ein Verfahren zum Verschweißen zweier unterschiedlicher Kunststoffe unter Verwendung eines Primers, wobei die beiden zu fügenden Kunststoffe zueinander eine gewichtete quadratische Distanz der Hansen-Parameter $(R_a)^2$ von größer 22 MPa aufweisen und der Primer ein Polymer enthält, welches zu beiden zu fügenden Kunststoffen eine gewichtete quadratische Distanz der Hansenpara- meter $(R_a)^2$ von kleiner 22 MPa aufweist. Darüber hinaus betrifft die vorliegende Erfindung entsprechend ver- schweißte Produkte.

**EP 3 156 210 A1**

**Beschreibung**

Die vorliegende Erfindung bezieht sich auf ein Verfahren zum Verschweißen von zwei unterschiedlichen Kunststoffen unter Verwendung eines Primers, wobei die beiden zu fügenden Kunststoffe zueinander eine gewichtete quadratische Distanz der Hansen-Parameter $(R_a)^2$ von größer 22 MPa aufweisen und der Primer ein Polymer enthält, welches zu beiden zu fügenden Kunststoffen eine gewichtete quadratische Distanz der Hansen-Parameter $(R_a)^2$ von kleiner 22 MPa aufweist. Darüber hinaus betrifft die vorliegende Erfindung entsprechend verschweißte Produkte.

Aus dem Stand der Technik sind verschiedene Verfahren bekannt, um zwei oder mehrere Substrate, die aus Kunststoffen, wie zum Beispiel aus Polyethylen (PE), Polyacrylaten oder Polyamid (PA) bestehen, miteinander zu verbinden. Dabei gibt es sowohl mechanische Verbindungsmöglichkeiten, wie beispielsweise das Rasten oder Schrauben, oder Klebeverfahren. Alternativ dazu können Kunststoffe auch miteinander verschweißt werden. Beim Schweißen handelt sich um ein Fügeverfahren für eine nicht lösbare, stofflich physikalische Verbindung im Allgemeinen artgleicher Kunststoffe, wie z.B. PE mit PE oder PA mit PA. Artgleiche thermoplastische Kunststoffe sind solche Polymere, die sich hinsichtlich ihrer Molekularstruktur, ihrer Schmelztemperatur, der Schmelzviskosität und ihres Wärmeausdehnungskoeffizienten nicht wesentlich unterscheiden und grundsätzlich bedingt miteinander mischbar sind. Meistens handelt sich es bei artgleichen Kunststoffen um Kunststoffe einer identischen Polymer-Basis bzw. um identische Kunststoff.

Es sind verschiedenste Verfahren bekannt, um zwei oder mehrere artgleiche Kunststoffe miteinander zu verschweißen. Dabei können unterschiedlichste Schweißverfahren eingesetzt werden, wie beispielsweise Infrarot-Schweißen, Infrarot/Vibrationsschweißen oder Ultraschallschweißen. Diese Verfahren zum Verschweißen von gleichartigen Kunststoffen basieren darauf, dass die jeweiligen Kunststoffe im Bereich der Schweißzone aufgeschmolzen werden und dass sich die Stoffe in dieser Zone stoff- und kraftschlüssig miteinander verbinden.

Diese Schweißverfahren funktionieren immer so lange gut, solange artgleiche Kunststoffe miteinander verbunden werden sollen. Sobald allerdings zwei Kunststoffe miteinander verschweißt werden sollen, die artungleich bzw. unverträglich miteinander sind, wie zum Beispiel Kunststoffe aus Polyamid und Polystyrol, kann keine dauerhafte Verbindung mit hoher mechanischer Festigkeit zwischen den beiden Substraten hergestellt werden. In dem Fall des Versuches eines direkten Verschweißens mit dem aus dem Stand der Technik bekannten Schweißverfahren der zweier gänzlich unterschiedlichen Kunststoffe, die nicht miteinander mischbar sind, werden keine oder nur sehr geringe Festigkeiten erzielt.

Bisher konnten entsprechende unterschiedliche Kunststoffe lediglich durch eine mechanische Verbindung oder ein Klebeverfahren miteinander verbunden werden. Der Nachteil an einer mechanischen Verbindung ist die komplizierte Anbringung, die punktuelle Materialbelastung als auch die Notwendigkeit eines zusätzlichen mechanischen Verbindungsmittels. Des Weiteren können bei einer mechanischen Verbindung selten stoffschlüssige Verbindungen erreicht werden. Der Nachteil an einem Klebeverfahren ist jedoch, dass die Endfestigkeit der Verbindung erst nach einem langen Zeitraum, der bis zu mehreren Wochen betragen kann, erreicht wird. Des Weiteren erfordert das Verkleben von niederenergetischen Oberflächen meist eine aufwendige Vorbehandlung der Fügepartner. Zusätzlich ist eine Klebeverbindung häufig aufgrund der äußeren Witterung nicht unbegrenzt stabil. Außerdem ist die Bereitstellung einer sauberen Klebeverbindung häufig kompliziert und zeitaufwendig. Somit stellt die Verbindung mittels eines Schweißverfahrens für Kunststoffe die sauberste, schnellste und einfachste Lösung dar.

Die Aufgabe der vorliegenden Erfindung bestand somit darin, ein einfaches Verfahren zum Verschweißen von zwei unterschiedlichen Kunststoffen zu finden. Dabei sollte die Verbindung zwischen diesen unterschiedlichen Kunststoffen durch die Schweißnaht möglichst stabil und von Dauer sein.

Überraschenderweise wurde gefunden dass diese Aufgabe durch ein Verfahren zum Verschweißen von zwei unterschiedlichen Kunststoffen unter Verwendung eines Primers gelöst wird, wobei die beiden zu fügenden Kunststoffe zueinander eine gewichtete quadratische Distanz der Hansen-Parameter $(R_a)^2$ von größer 22 MPa aufweisen und der Primer ein Polymer enthält, welches zu beiden zu fügenden Kunststoffen eine gewichtete quadratische Distanz der Hansen-Parameter $(R_a)^2$ von kleiner 22 MPa aufweist.

Überraschenderweise wurde gefunden, dass durch die Auswahl der Kunststoffe und des Primers anhand der gewichteten quadratischen Distanz der Hansen-Parameter $(R_a)^2$ der Primer so ausgewählt werden kann, dass die beiden unterschiedlichen Kunststoffe miteinander verschweißt werden können. Durch die Verwendung eines entsprechenden Primers konnten beim Verschweißen von zwei unterschiedlichen Kunststoffen besonders stabile und alterungsbeständige Verbindungen zwischen den Kunststoffen erhalten werden.

Die gewichtete quadratische Distanz der Hansen-Parameter $(R_a)^2$ bestimmt sich gemäß der folgenden Formel:

$$(R_a)^2 = 4(\Delta\delta_D)^2 + (\Delta\delta_P)^2 + (\Delta\delta_H)^2$$

In dieser Formel ist $\delta_D$ der Hansen-Parameter für die Dispersionskräfte, $\delta_P$ der Hansen-Parameter für die

Polarität und $\delta_H$ der Hansen-Parameter für die Wasserstoffbrückenbindungen. $\Delta\delta_D$, $\Delta\delta_P$ und $\Delta\delta_H$ stellen jeweils die Differenzen dieser Hansen-Parameter der zu vergleichenden Kunststoffe bzw. Polymere dar, z.B. $\Delta\delta_D = (\delta_{D1} - \delta_{D2})$ der Polymere 1 und 2. Die Bestimmung der Werte der einzelnen Hansen-Parameter $\delta_D$, $\delta_P$ und $\delta_H$ für die jeweiligen Kunststoffe bzw. Polymere erfolgt gemäß dem Buch "Hansen Solubility Parameters: A User's Handbook" von Charles M. Hansen (second edition; Taylor & Francis Group; 2007; ISBN-10 0-8493-7248-8). Dieser Quelle können bereits viele Werte einzelner Polymere entnommen werden. Gemäß der in diesem Buch beschriebenen Methode können die Hansen-Parameter vorzugsweise mit dem Programm HSPIP (4th Edition 4.1.07) aus der mitgelieferten Datenbank entnommen, oder, falls nicht vorhanden, mit der enthaltenen "DIY" - Funktionalität des Programms, vorzugsweise unter Verwendung des mitgelieferten neuronalen Netzes, wie in der Hilfe beschrieben, bestimmt werden. Das HSPIP Programm ist über die Fa. Steven Abbott TCNF Ltd erhältlich.

Bei den beiden zu fügenden Kunststoffen handelt es sich um zwei verschiedene Kunststoffe, die prinzipiell aus allen bekannten Kunststoffen ausgewählt werden können, solange die beiden zu fügenden Kunststoffe zueinander eine gewichtete quadratische Distanz der Hansen-Parameter $(R_a)^2$ von größer 22 MPa, vorzugsweise von größer 25 MPa, insbesondere von größer 30 MPa, besonders bevorzugt von größer 35 MPa aufweisen. Bei einem entsprechenden $(R_a)^2$ sind die beiden Kunststoffe nicht miteinander mischbar und somit unverträglich, wodurch ein Verschweißen der beiden Kunststoffe ohne weitere Hilfsmittel nicht oder nur schlecht möglich ist.

Die zu fügen Kunststoffe basieren vorzugsweise jeweils mindestens auf einem Polymer, so basiert ein Polyamid-Kunststoff auf einem Polyamid-Polymer. Vorzugsweise besteht der zu fügende Kunststoff zu mehr als 80 Gew.-%, insbesondere zu mehr als 90 Gew.-%, bevorzugt zu mehr als 95 Gew.-%, besonders bevorzugt zu mehr als 98 Gew.-% aus diesem Polymer bzw. der Polymer-Mischung, jeweils bezogen auf den Polymeranteil des zu fügenden Kunststoffes (Gesamt Kunststoff ohne Füllstoffe). Neben dem Polymer kann der Kunststoff weitere Komponenten enthalten, z.B. Füllstoffe, wie Glasfasern, Pigmente, mineralische Partikel, Farbstoffe, Rheologie Hilfsmittel, Entformungshilfen oder Stabilisatoren. Vorzugsweise besteht der zu fügende Kunststoff zu mehr als 40 Gew.-%, insbesondere zu mehr als 60 Gew.-%, vorzugsweise zu mehr als 70 Gew.-%, bevorzugt zu mehr als 90 Gew.-% aus diesem Polymer, jeweils bezogen auf den gesamten Kunststoff (mit Füllstoffen). Bevorzugt weisen die Kunststoffe einen Gehalt an diesem Polymer von 50-90 Gew.-%, insbesondere 60-80 Gew.-% auf, jeweils bezogen auf den gesamten Kunststoff (mit Füllstoffen).

Die zu fügen Kunststoffe bzw. die Polymere, auf denen diese Kunststoffe basieren, können aus den folgenden genannten ausgewählt werden: Bei den Kunststoffen handelt es sich vorzugsweise um thermoplastische Kunststoffe, wobei exemplarisch als geeignete Thermoplaste die folgenden genannt werden: Polyoxyalkylene, Polycarbonate (PC), Polyester wie Polybutylenterephthalat (PBT) oder Polyethylenterephthalat (PET), Polyolefine wie Polyethylen oder Polypropylen, Poly(meth)acrylate, Polyamide, vinylaromatische (Co)polymere wie Polystyrol, schlagzäh modifiziertes Polystyrol wie HI-PS, oder ASA-, ABS oder AES-Polymerisate, Polyarylenether wie Polyphenylenether (PPE), Polysulfone, Polyphenylensulfide (PPS), Polyurethane, Polylactide, halogenhaltige Polymerisate, wie Polyvinylchlorid (PVC), imidgruppenhaltige Polymere, Celluloseester, Siliconpolymere und thermoplastische Elastomere. Es können auch Mischungen unterschiedlicher Thermoplaste als Materialien für die Kunststoffformteile eingesetzt werden. Bei diesen Mischungen kann es sich um ein/oder mehrphasige Polymerblends handeln. Die miteinander zu verbindenden Formteile können aus identischen oder verschiedenen Thermoplasten bzw. Thermoplastblends bestehen, vorzugsweise weisen die Kunststoffe ein thermoplastisches Polymer als Hauptkomponete, insbesondere zu mehr als 40 Gew.-%, insbesondere zu mehr als 60 Gew.-%, vorzugsweise zu mehr als 70 Gew.-%, bevorzugt zu mehr als 90 Gew.-% aus diesem einen thermoplastischen Polymer, jeweils bezogen auf den Polymeranteil des Kunststoffes, insbesondere jeweils bezogen auf den gesamten Kunststoff (mit Füllstoffen).

Geeignet als zu fügende Kunststoffe sind zum Beispiel Polyamid-Kunststoffe. Bei dem Polyamid-Kunststoff handelt es sich vorzugsweise um ein thermoplastisches Polyamid. Zu den Thermoplasten auf Amid-Basis gehören beispielsweise Polyamid 6, ein Homopolymerisat aus epsilon-Caprolactam (Polycaprolactam); Polyamid 11, ein Polykondensat aus 11-Aminoundecansäure (Poly-11-aminoundecanamid); Polyamid 12, ein Homopolymerisat aus omega-Laurinlactam (Polylaurinlactam); Polyamid 6.6, ein Homopolykondensat aus Hexamethylendiamin und Adipinsäure (Polyhexamethylenadipamid); Polyamid 6.10, ein Homopolykondensat aus Hexamethylendiamin und Sebacinsäure (Polyhexamthylensebacamid); Polyamid 6.12 ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamthylenterephthalamid), Poly(p-phenylenterephthalamid) oder Poly(m-phenylenterephthalamid) aus Phenylendiamin und Terephthalsäure, Polyphthalamide PPA aus verschiedenen Diaminen und Terephthalsäure sowie Gemische davon.

Optisch transparente Polyamide umfassen mikrokristalline Polyamide enthaltend lineare aliphatische Dicarbonsäuren und cycloaliphatische Diamine, amorphe Polyamide enthaltend lineare aliphatische Dicarbonsäuren und cycloaliphatische Diamine und optional Lactame bzw. Aminocarbonsäuren, amorphe Polyamide enthaltend Terephthalsäure und cycloaliphatische oder verzweigte aliphatische Diamine und optional Lactame bzw. Aminocarbonsäuren oder amorphe Polyamide enthaltend Isophthalsäure und cycloaliphatische oder lineare oder verzweigte aliphatische Diamine und optional Lactame bzw. Aminocarbonsäuren. Geeignete optisch transparente Polyamide sind beispielsweise Amide aus Dodecandisäure und einem Isomerengemisch des 4,4'-Bis(aminocyclohexyl)-methans, aus Terephthalsäure und dem Isomerengemisch des 2,2,4- und 2,4,4-Trimethylhexamethylendiamins, aus Dodecandisäure und dem Isomerengemisch des 3,3'-Dimethyl-4,4'-bis(aminocyclohexyl)-methans, aus Laurinlactam, Isophthalsäure und dem Isomerengemisch des 3,3'-Dimethyl- 4,4'-bis(aminocyclohexyl)-methans oder aus Tetradecandisäure und dem Isomerengemisch des 3,3'-Dimethyl- 4,4'-bis(aminocyclohexyl)-methans oder aus epsilon-Caprolactam oder omega-Laurinlactam.

Bevorzugte Polyamide werden ausgewählt aus der Gruppe bestehend aus Polyamid 6, Polyamid 6.6, Polyamid 6.10, Polyamid 6.12, Polyamid 10.10, Polyamid 11, Polyamid 12, Polyamid 10.12, Polyphthalamiden, optischen transparenten Polyamiden oder Mischungen auf Basis dieser Polyamide. Besonders bevorzugte Polyamide sind ausgewählt aus Polyamid 6, Polyamid 6.6, Polyamid 12, Polyphthalamiden, optisch transparenten Polyamiden sowie deren Mischungen, insbesondere Polyamid 6, Polyamid 6.6 sowie deren Mischungen.

Poly(meth)acrylat ist ein synthetischer, bevorzugt transparenter, thermoplastischer Kunststoff. Bevorzugte Poly(meth)acrylate sind aus 50 bis 100 Gew.-%, insbesondere 70 bis 100 Gew.-% Acrylat und/oder Methacrylat aufgebaut, wobei die (Meth)acrylat-Einheiten vorzugsweise mit einem C1 bis C12 Alkylrest, insbesondere C1-C4, bevorzugt Methylrest verestert sind. Die Schreibweise Poly(meth)acrylat gibt an, dass das Polymer aus Acrylat und/oder Methacrylat aufgebaut ist. Bzw. die Schreibweise (Meth)acrylat gibt an, dass es sich sowohl um ein Acrylat als auch um ein Methacrylat handeln kann. Insbesondere bevorzugt ist das Poly(meth)acrylat ein Polymethylmethacrylat (PMMA, umgangssprachlich auch Acrylglas oder Plexiglas). Bevorzugte Polymethylmethacrylate sind aus 50 bis 100 Gew.-%, insbesondere 70 bis 100 Gew.-% Methylmethacrylat aufgebaut.

Als Comonomere für den Aufbau des Poly(meth)acrylats, insbesondere des Polymethylmethacrylats kommen in erster Linie (Meth)acrylsäure, insbesondere Acrylsäure, und deren Alkylester mit 1 bis 12 Kohlenstoffatomen, insbesondere 1 bis 4 Kohlenstoffatomen im Alkylrest, sowie Acryl- und/oder Methacrylnitril, Acryl- und/oder Methacrylamid, Styrol und/oder Maleinsäureanhydrid in Betracht. Bevorzugt sind thermoplastisch und thermoelastisch verformbare Kunststoffe. Bevorzugte thermoplastische Polymethylmethacrylat-Kunststoffe haben gewichtsmittlere Molmassen (Gewichtsmittel Mw) von größer 50000 g/mol, insbesondere größer 100000 g/mol. Vorzugsweise weisen die thermoplastische Poly(meth)acrylat-, insbesondere Polymethylmethacrylat-Kunststoffe eine gewichtsmittlere Molmassen (Gewichtsmittel Mw) von kleiner 2000000 g/mol, insbesondere kleiner 1000000 g/mol, bevorzugt kleiner 500000 g/mol auf. Besonders bevorzugte thermoplastische Poly(meth)acrylat-, insbesondere Polymethylmethacrylat-Kunststoffe haben gewichtsmittlere Molmassen (Gewichtsmittel Mw) von 50000 g/mol bis 250000 g/mol, z. B. ca. 100000 g/mol bis ca. 180000 g/mol für den Spritzguss.

Geeignete Polyolefin-Kunststoffe sind insbesondere thermoplastische Polyolefin-Kunststoffe. Ein Polyolefin-Kunststoff basiert auf polyolefinischen Polymeren, wie Homo- und Copolymere von alpha-Olefinen. Die polyolefinischen Polymere können ausgewählt werden aus der Gruppe bestehend aus Poly-alpha-Olefin-Homopolymeren auf Basis von Ethylen, Propylen und/oder Butylen, insbesondere Homopolymere aus Ethylen oder Propylen, und Poly-alpha-Olefin-Copolymere auf Basis von Ethen, Propen, 1-Buten, 1-Hexen und 1-Octen, insbesondere Ethylen/alpha-Olefin- und Propylen/alpha-Olefin-Copolymere, vorzugsweise Copolymere von Ethylen oder Propen mit 1-Buten, 1-Hexen, 1-Octen, oder einer Kombination davon. Insbesondere sind die Polyolefin-Kunststoffe ausgewählt aus Polyethylen- (insbesondere high-density/HD-Polyethylen-, medium-density/MD-Polyethylen-, low-density/LD-Polyethylen-, ultra high molecular weight/UHMW-Polyethylen- und linear low-density/LLD-Polyethylen-, vorzugsweise HD-Polyethylen-, MD-Polyethylen- oder LD-Polyethylen-) und Polypropylen-Kunststoffen. Besonders bevorzugt ist der Polyolefin-Kunststoff ein Polypropylen-Kunststoff.

Vorzugsweise haben die Polyolefin-Polymere, insbesondere Polypropylen-Polymere, eine gewichtsmittlere Molmasse (Gewichtsmittel Mw) von größer 10000 g/mol, insbesondere größer 20000 g/mol, bevorzugt größer 50000 g/mol, besonders bevorzugt größer 100000 g/mol. Vorzugsweise weisen die Polyolefin-Polymere, insbesondere Polypropylen-Polymere eine gewichtsmittlere Molmasse (Gewichtsmittel Mw) von kleiner 2000000 g/mol, insbesondere kleiner 1000000 g/mol, bevorzugt kleiner 500000 g/mol auf. Besonders bevorzugte Polyethylen-Polymere weisen eine gewichtsmittlere Molmasse (Gewichtsmittel Mw) von 50000 g/mol bis 1000000 g/mol, insbesondere von 200000 g/mol bis 500000 g/mol auf. Andere bevorzugte Polyethylen-Polymere (UHMW-PE-Polymere) weisen eine gewichtsmittlere Molmasse von größer 2000000 g/mol, insbesondere von 4000000 - 6000000 g/mol auf. Besonders bevorzugte Polyolefin-Polymere, insbesondere Polypropylen-Polymere haben gewichtsmittlere Molmassen (Gewichtsmittel Mw) von 50000 g/mol bis 250000 g/mol.

Geeignete Polyester-Kunststoffe sind ebenfalls an sich bekannt und in der Literatur beschrieben. Bevorzugte Polyester-Kunststoffe umfassen einen Polyester mit einem aromatischen Ring in der Hauptkette, der von einer aromatischen Dicarbonsäure herrührt. Der aromatische Ring kann auch substituiert sein, z. B. durch Halogen wie Chlor oder Brom oder durch C1-C4-Alkylgruppen wie Methyl-, Ethyl-, i- bzw. n-Propylgruppenoder n-, i- bzw. t-Butylgruppen. Die Polyester können durch Umsetzung von aromatischen Dicarbonsäuren, deren Estern oder anderer esterbildender Derivate hiervon mit aliphatischen Dihydroxyverbindungen in an sich bekannter Weise hergestellt werden. Als bevorzugte Dicarbonsäuren sind Naphthalindicarbonsäure, ortho-Phthalsäure, Terephthalsäure und Isophthalsäure oder deren Mischungen zu nennen. Bis zu 30 Mol-% der aromatischen Dicarbonsäuren können durch aliphatische oder cycloaliphatische Dicarbonsäuren wie Adipinsäure, Azelainsäure, Sebacinsäure, Dodecandisäure und Cyclohexandicarbonsäure ersetzt werden. Von den aliphatischen Dihydroxyverbindungen werden Diole mit 2 bis 8 Kohlenstoffatomen, insbesondere 1,2-Ethandiol, 1,4-Butandiol, 1,6-Hexandiol, 1,4-Hexandiol, 1,4-Cyclohexandimethylol und Neopentylglykol oder deren Mischungen bevorzugt. Als besonders bevorzugte Polyester sind Polyalkylenterephthalate, die sich von Alkandiolen mit 2 bis 6 C-Atomen ableiten, zu nennen.

Die Polyester-Kunststoffe werden vorzugsweise ausgewählt aus der Gruppe aus Polyethylenterephthalat (PET)-, Polyethylennaphthalat-, Polybutylennaphthalat- und Polybutylenterephthalat (PBT)-Kunststoffen sowie Mischungen dieser, insbesondere Polyethylenterephthalat (PET)- und Polybutylenterephthalat (PBT)-Kunststoffen sowie Mischungen dieser.

Geeignete Polycarbonat-Kunststoffe sind vorzugsweise thermoplastische Kunststoffe, die sich formal als Polyester der Kohlensäure beschreiben lassen. Die Herstellung von Polycarbonaten kann prinzipiell durch Polykondensation von Phosgen mit Diolen, bevorzugt Bisphenolen, erfolgen. Bevorzugte Polycarbonate sind aromatische Polycarbonate. Aromatische Polycarbonate sind solche, die mindestens aus einem aromatischen Monomer aufgebaut werden. Bevorzugte Polycarbonat-Kunststoffe sind Bisphenol, insbesondere Bisphenol A und Bisphenol F basierte Polycarbonat-Kunststoffe. Bei den Bisphenol basieren Polycarbonaten besteht bevorzugt die Diol-Komponete zu 50 Gew.-%, insbesondere zu 70 Gew.-%, vorzugsweise zu 90 Gew.-%, bevorzugt zu 100 Gew.-% aus Bisphenol, insbesondere Bisphenol A und/oder Bisphenol F.

Ebenfalls geeignete Kunststoffe sind Kunststoffe enthaltend mindestens ein vinylaromatisches Polymer, insbesondere Copolymer, aus Monomeren ausgewählt aus Styrol, Chlorstyrol, alpha-Methylstyrol und para-Methylstyrol. In untergeordneten Anteilen können die vinylaromatischen Copolymere (vorzugsweise nicht mehr als 20, insbesondere nicht mehr als 8 Gew.-%) auch Comonomere wie (Meth)acrylnitril oder (Meth)acrylsäureester am Aufbau beteiligt sein. Besonders bevorzugte vinylaromatische Polymere sind Polystyrol, Styrol-Acrylnitril-Copolymere (SAN), Polystyrolmethylmethacrylat (SMMA) und schlagzäh modifiziertes Polystyrol (HIPS = High Impact Polystyrene). Es versteht sich, dass auch Mischungen dieser Polymeren eingesetzt werden können.

Ganz besonders bevorzugte vinylaromatische Polymere sind ASA-, ABS- und AES-Polymerisate (ASA = Acrylnitril-Styrol-Acrylester, ABS = Acrylnitril-Butadien-Styrol, AES = Acrylnitril-EPDM-Kautschuk-Styrol). Diese schlagzähen vinylaromatischen Polymere enthalten mindestens ein kautschukelastisches Pfropfpolymerisat und ein thermoplastisches Polymerisat (Matrixpolymerisat). Als Matrixmaterial wird im Allgemeinen auf ein Styrol/AcrylnitrilPolymerisat (SAN) zurückgegriffen. Bevorzugt werden Pfropfpolymerisate verwendet, die als Kautschuk einen Dienkautschuk auf Basis von Dienen wie z. B. Butadien oder Isopren (ABS), einen Alkylacrylatkautschuk auf Basis von Alkylestern der Acrylsäure wie n-Butylacrylat und 2-Ethylhexylacrylat, einen EPDM-Kautschuk auf Basis von Ethylen, Propylen und einem Dien oder Mischungen dieser Kautschuke bzw. Kautschukmonomeren enthalten.

Das gewichtsmittlere Molekulargewicht dieser vinylaromatischen Polymere ist insbesondere von 1500 bis 2000000 g/mol, vorzugsweise von 70000 bis 1000000 g/mol.

Zudem kann der Kunststoff eine Mischung aus mindestens einem Polycarbonat und mindestens einem vinylaromatischen Polymer sein, bevorzugt den oben erwähnten. Vorzugsweise enthält diese Mischung mehr von einem Polycarbonat als von den vinylaromatischen Polymeren, insbesondere SMMA, SAN, ASA, ABS und/oder AES, vorzugsweise ABS. Bevorzugt ist das Verhältnis vom Polycarbonat, insbesondere vom aromatischen Polycarbonat, zum vinylaromatischen Polymer, insbesondere SMMA, SAN, ASA, ABS und/oder AES, vorzugsweise ABS, 1:1 bis 100:1, insbesondere 2:1 bis 50:1, vorzugsweise 3:1 bis 10:1

Geeignet zur Herstellung der Kunststoffe sind auch Polyoxyalkylenhomo- oder -copolymerisate, insbesondere (Co)polyoxymethylene (POM). Ganz allgemein weisen diese Polymere mindestens 50 Mol-% an wiederkehrenden Einheiten -CH2O in der Polymerhauptkette auf. Die Homopolymeren werden im Allgemeinen durch Polymerisation von Formaldehyd oder Trioxan hergestellt, vorzugsweise in Gegenwart von geeigneten Katalysatoren. Bevorzugt sind Polyoxymethylencopolymere und Polyoxymethylenterpolymerisate. Die bevorzugten Polyoxymethylen(co)polymere haben Schmelzpunkte von mindestens 150 °C und Molekulargewichte (Gewichtsmittelwert) Mw im Bereich von 5000 bis 200000, vorzugsweise von 7000 bis 150000 g/mol. Endgruppenstabilisierte Polyoxymethylenpolymerisate, die an den Kettenenden C-C Bindungen aufweisen, werden besonders bevorzugt.

Unter Polyarylenethern sind bevorzugt sowohl Polyarylenether an sich, Polyarylenethersulfide, Polyarylenethersulfone oder Polyarylenetherketone zu verstehen. Deren Arylengruppen können gleich oder verschieden sein und unabhängig voneinander einen aromatischen Rest mit 6 bis 18 C-Atomen bedeuten. Beispiele geeigneter Arylenreste sind Phenylen, Biphenylen, Terphenylen, 1,5-Naphthylen, 1,6-Naphthylen, 1,5-Anthrylen, 9,10-Anthrylenoder2,6-Anthrylen. Hiervon werden 1,4-Phenylen und 4,4'-Biphenylen bevorzugt. Vorzugsweise sind diese aromatischen Reste nicht substituiert. Sie können jedoch einen oder mehrere Substituenten tragen.

Des Weiteren sind Polyurethane, Polyisocyanurate und Polyharnstoffe geeignete Materialien für die Herstellung der Kunststoffformteile. Weiche, halbharte oder harte, thermoplastische oder vernetzte Polyisocyanat-Polyadditionsprodukte, beispielsweise Polyurethane, Polyisocyanurate und/oder Polyharnstoffe, sind allgemein bekannt. Ihre Herstellung ist vielfältig beschrieben und erfolgt üblicherweise durch Umsetzung von Isocyanaten mit gegenüber Isocyanaten reaktiven Verbindungen bei allgemein bekannten Bedingungen. Bevorzugt wird die Umsetzung in Gegenwart von Katalysatoren und/oder Hilfsstoffen durchgeführt.

Als Isocyanate kommen die an sich bekannten aromatischen, arylaliphatischen, aliphatischen und/oder cycloaliphatischen organischen Isocyanate, bevorzugt Diisocyanate, in Frage.

Als gegenüber Isocyanaten reaktive Verbindungen können beispielsweise allgemein bekannte Verbindungen mit einem Molekulargewicht von 60 bis 10.000 g/mol und einer Funktionalität gegenüber Isocyanaten von 1 bis 8, bevorzugt 2 bis 6 eingesetzt werden (im Falle von thermoplastischen Polyurethanen Funktionalität ca. 2), beispielsweise Polyole wie Polyetherpolyole, Polyesterpolyole und Polyetherpolyesterpolyole mit einem Molekulargewicht von 500 bis 10.000 g/mol und/oder Diole, Triole und/oder Polyole mit Molekulargewichten kleiner als 500 g/mol.

Polylactide, also Polymere der Milchsäure, sind an sich bekannt und können nach an sich bekannten Verfahren hergestellt werden.

Neben Polylactid können auch Co-oder Blockcopolymere auf der Basis von Milchsäure und weiteren Monomeren verwendet werden. Meist werden lineare Polylactide eingesetzt. Es können aber auch verzweigte Milchsäurepolymerisate verwendet werden. Als Verzweiger können z. B. mehrfunktionelle Säuren oder Alkohole dienen.

Als geeignete halogenhaltige Polymerisate sind beispielsweise Polymerisate des Vinylchlorids zu nennen, insbesondere Polyvinylchlorid (PVC) wie Hart-PVC und Weich-PVC und Copolymerisate des Vinylchlorids wie PVC-U-Formmassen. Weiterhin kommen fluorhaltige Polymere in Betracht, insbesondere Polytetrafluorethylen (PTFE), Tetrafluorethylen-Perfluorpropylen-Copolymere (FEP), Copolymere des Tetrafluorethylens mit Perfluoralkylvinylether, Ethylen-Tetrafluorethylen-Copolymere (ETFE), Polyvinylidenfluorid (PVDF), Polyvinylfluorid (PVF), Polychlortrifluorethylen (PCTFE), und Ethylen-Chlortrifluorethylen-Copolymere (ECTFE).

Imidgruppenhaltige Polymere sind insbesondere Polyimide, Polyetherimide und Polyamidimide.

Geeignete Celluloseester sind etwa Celluloseacetat, Celluloseacetobutyrat und Cellulosepropionat.

Daneben kommen auch Siliconpolymere als Thermoplaste in Betracht. Geeignet sind insbesondere Siliconkautschuke. Dabei handelt es sich üblicherweise um Polyorganosiloxane, die zu Vernetzungsreaktionen fähige Gruppen aufweisen.

Schliesslich kann auch die Verbindungsklasse der thermoplastischen Elastomere (TPE) verwendet werden. TPE lassen sich wie Thermoplaste verarbeiten, haben jedoch kautschukelastische Eigenschaften. Geeignet sind TPE-Blockcopolymere, TPE-Pfropfcopolymere und segmentierte TPE-Copolymere aus zwei oder mehr Monomerbausteinen. Besonders geeignete TPE sind thermoplastische Polyurethan-Elastomere (TPE-U oder TPU), Styrol-Oligoblock-Copolymere (TPE-S) wie SBS (Styrol-ButadienStyrol-Blockcopolymer) und SEBS (Styrol-Ethylen-Butylen-Styrol-Blockcopolymer, erhältlich durch Hydrieren von SBS), thermoplastische Polyolefm-Elastomere (TPE-O), thermoplastische Polyester-Elastomere (TPE-E), thermoplastische Polyamid-Elastomere (TPE-A) und insbesondere thermoplastische Vulkanisate (TPE-V).

In Folgenden werden verschiedene Ausführungsformen aufgeführt, die alleine oder in Kombination zweier oder mehrerer bevorzugt sind: Vorzugsweise ist keiner der zu fügenden Kunststoffe aus einem aus einem Polyoxyalkylene. Vorzugsweise ist keiner der zu fügenden Kunststoffe aus einem Polycarbonat (PC). Vorzugsweise ist keiner der zu fügenden Kunststoffe aus einem Polybutylenterephthalat (PBT) und/oder Polyethylenterephthalat (PET), insbesondere Polyester. Vorzugsweise ist keiner der zu fügenden Kunststoffe aus einem Polyethylen und/oder Polypropylen, insbesondere Polyolefin. Vorzugsweise ist keiner der zu fügenden Kunststoffe aus einem Polyamid. Vorzugsweise ist keiner der zu fügenden Kunststoffe aus Polystyrol, insbesondere aus einem vinylaromatische (Co)polymer. Vorzugsweise ist keiner der zu fügenden Kunststoffe aus einem ASA-, ABS- oder AES-Polymerisat. Vorzugsweise ist keiner der zu fügenden Kunststoffe aus einem Polyarylenether. Vorzugsweise ist keiner der zu fügenden Kunststoffe aus einem Polysulfon. Vorzugsweise ist keiner der zu fügenden Kunststoffe aus einem Polyphenylensulfid. Vorzugsweise ist keiner der zu fügenden Kunststoffe aus einem Polyurethan. Vorzugsweise ist keiner der zu fügenden Kunststoffe aus einem Polylactid. Vorzugsweise ist keiner der zu fügenden Kunststoffe aus einem halogenhaltigen Polymerisat. Vorzugsweise ist keiner der zu fügenden Kunststoffe aus einem imidgruppenhaltigen Polymer. Vorzugsweise ist keiner der zu fügenden Kunststoffe aus einem Celluloseester. Vorzugsweise ist keiner der zu fügenden Kunststoffe aus einem Siliconpolymer. Vorzugsweise ist keiner der zu fügenden Kunststoffe aus einem thermoplastischen Elastomer.

Die Hansen-Parameter für die oben genannten Polymere, aus denen die zu fügenden Kunststoffe hergestellt werden können, sind entweder bekannt oder können, wie vorher ausgeführt bestimmt, werden. Um die gewichtete quadratische Distanz der Hansen-Parameter $(R_a)^2$ zu bestimmen, kann dann die folgende, wie oben definierte Formel verwendet werden:

$$(R_a)^2 = 4(\Delta\delta_D)^2 + (\Delta\delta_P)^2 + (\Delta\delta_H)^2$$

Für die zu fügenden unterschiedlichen Kunststoffe sollen die unterschiedlichen Polymere, aus denen die jeweiligen Kunststoffe sind, eine gewichtete quadratische Distanz der Hansen-Parameter $(R_a)^2$ von größer 22 MPa, vorzugsweise von größer 25 MPa, insbesondere von größer 30 MPa, besonders bevorzugt von größer 35 MPa aufweisen.

Ein weiterer wesentlicher Bestandteil der Erfindung ist die Verwendung mindestens eines Primers, vorzugsweise genau eines Primers. Der Primer enthält mindestens ein erstes Polymer, welches zu beiden zu fügenden Kunststoffen, insbesondere zu den Polymer, auf denen die Kunststoffe basieren, eine gewichtete quadratische Distanz der Hansen-Parameter $(R_a)^2$ von kleiner 22 MPa, insbesondere von kleiner 17 MPa, bevorzugt von kleiner 15 MPa, besonders bevorzugt von kleiner 12 MPa aufweist. Dadurch das $(R_a)^2$ entsprechende Werte annimmt, ist das Polymer des Primers mit den zufügen Kunststoffen bzw. dessen Polymeren kompatibel und mischbar, wobei die Verträglichkeit der einzelnen Komponenten besser wird je kleiner der Wert für $(R_a)^2$ ist. So können besonders stabile und haltbare Schweißverbindungen erhalten werden.

Der Primer stellt ein Schweißhilfsmittel dar, welches vorzugsweise als eine Vorbehandlungsschicht auf mindestens einem der zu verschweißenden Oberflächen der Substrate im Bereich der Fügezone aufgetragen wird. Der Primer ist nicht als Klebstoff, Reinigungsmittel oder ähnliches zu verstehen, vielmehr ist der Primer ein Hilfsmittel zum Schweißen, wodurch die Fügepartner in der Fügezone (bzw. Schweißzone) kompatibel zueinander gemacht werden und so in der Fügezone beim Fügen eine stoff- und kraftschlüssige Verbindung zwischen den zu verschweißenden Substraten entsteht.

Durch die Verwendung eines entsprechenden Primers, enthaltend ein erfindungsgemäßes Polymer, können die unterschiedlichen Kunststoffe beim Schweißen in der Fügenaht kompatibilisiert werden und somit wird eine stabile und dauerhafte Verbindung erzielt. Ohne die Verwendung eines entsprechenden Primers konnten keine oder nur sehr geringe Festigkeiten der geschweißten Verbindung erzielt werden. Vorzugsweise weisen die gefügten Substrate eine Zugfestigkeit von mehr als 2 MPa, insbesondere mehr als 5 MPa, bevorzugt mehr als 7 MPa auf. Die Zugfestigkeit wird mittels einer Zuggeschwindigkeit von 5 mm/s bestimmt, wobei die zu vermessenden Proben mit einer Geometrie von 130 mm x 68 mm x 3 mm auf Stoß mit der 130 mm x 3 mm Oberfläche unter Verwendung des Primers verschweißt wurden.

Als geeignete Polymere für den Primer kommen alle bereits oben genannten Polymere für die Kunststoffe in Betracht.

In Folgenden werden verschiedene Ausführungsformen aufgeführt, die alleine oder in Kombination zweier oder mehrerer bevorzugt sind: Vorzugsweise ist der Primer im Wesentlichen frei von Polyoxyalkylenen. Vorzugsweise ist der Primer im Wesentlichen frei von Polycarbonaten (PC). Vorzugsweise ist der Primer im Wesentlichen frei von Polybutylenterephthalaten (PBT) und/oder Polyethylenterephthalaten (PET), insbesondere Polyesteren. Vorzugsweise ist der Primer im Wesentlichen frei von Polyethylen und/oder Polypropylen, insbesondere Polyolefinen. Vorzugsweise ist der Primer im Wesentlichen frei von Polyamiden. Vorzugsweise ist der Primer im Wesentlichen frei von Polystyrol, insbesondere aus einem vinylaromatische (Co)polymeren. Vorzugsweise ist der Primer im Wesentlichen frei von ASA-, ABS- und/oder AES-Polymerisaten. Vorzugsweise ist der Primer im Wesentlichen frei von Polyarylenetheren. Vorzugsweise ist der Primer im Wesentlichen frei von Polysulfonen. Vorzugsweise ist der Primer im Wesentlichen frei von Polyphenylensulfiden. Vorzugsweise ist der Primer im Wesentlichen frei von Polyurethanen. Vorzugsweise ist der Primer im Wesentlichen frei von Polylactiden. Vorzugsweise ist der Primer im Wesentlichen frei von halogenhaltigen Polymerisaten. Vorzugsweise ist der Primer im Wesentlichen frei von imidgruppenhaltigen Polymeren. Vorzugsweise ist der Primer im Wesentlichen frei von Celluloseestern. Vorzugsweise ist der Primer im Wesentlichen frei von Siliconpolymern. Vorzugsweise ist der Primer im Wesentlichen frei von thermoplastischen Elastomeren. Unter dem Begriff "im Wesentlichen frei von" wird erfindungsgemäß verstanden, wenn der Primer weniger als 5 Gew.-%, vorzugsweise weniger als 1 Gew.-%, ganz besonders bevorzugt weniger als 0,1 Gew.-% der jeweiligen Substanzen, insbesondere nicht die jeweiligen Substanzen enthalten.

Neben dem erfindungsgemäßen Polymer kann der Primer vorzugsweise auch mindestens ein weiteres Polymer enthalten, welches von dem ersten erfindungsgemäßen Polymer unterschiedlich ist, insbesondere sich im Polymeraufbau unterscheidet. Das mindestens eine weitere Polymer ist vorzugsweise zu mindestens einem der beiden zu verschweißenden Kunststoffe und zum ersten erfindungsgemäßen Polymer im Primer kompatibel. Vorzugsweise weist das weitere Polymer zu einem, insbesondere zu beiden zu fügenden Kunststoffen und insbesondere auch zu dem oben genannten ersten erfindungsgemäßen Polymer eine gewichtete quadratische Distanz der Hansen-Parameter $(R_a)^2$ von kleiner 22 MPa, insbesondere von kleiner 17 MPa, bevorzugt von kleiner 15 MPa, besonders bevorzugt von kleiner 12 MPa auf.

Der Gehalt des weiteren Polymeres am Primer ist bevorzugt 1 - 40 Gew.-%, insbesondere 5 - 30 Gew.-%, besonders bevorzugt 10 - 20 Gew.-%, jeweils bezogen auf das Gesamtgewicht des Primers. Der Gehalt des weiteren Polymeres am Polymergehalt des Primer ist bevorzugt 5 - 70 Gew.-%, insbesondere 20 - 60 Gew.-%, besonders bevorzugt 30 - 50 Gew.-%, jeweils bezogen auf den Gesamtpolymeranteil des Primers (Primer ohne Lösungsmittel und ohne Füllstoffe). In einer bevorzugten Ausführungsform enthält der Primer kein weiteres Polymer, sondern weist nur das erste erfindungsgemäße Polymer auf.

In einer bevorzugten Ausführungsform ist das erste erfindungsgemäße im Primer enthaltene Polymer, insbesondere jedes Polymer im Primer, bevorzugt der Primer, im Wesentlichen frei von Maleinsäureanhydrid-Gruppen. In einer weiteren bevorzugten Ausführungsform ist das erste erfindungsgemäße im Primer enthaltene Polymer, insbesondere jedes Polymer im Primer, bevorzugt der Primer, im Wesentlichen frei von Maleinsäureanhydrid-Gruppen und/oder Amin-Gruppen, insbesondere im Wesentlichen frei von Säure-Gruppen, Säureanhydrid-Gruppen, Amin-Gruppen und/oder Hydroxyl-Gruppen, vorzugsweise im Wesentlichen frei von Säure-Gruppen, Säureanhydrid-Gruppen, Hydroxyl-Gruppen, Thiol-Gruppen, Amin-Gruppen, Epoxid-Gruppen und/oder Isocyanat-Gruppen, bevorzugt im Wesentlichen frei von jeglichen reaktiven Gruppen. Unter den oben beschriebenen Gruppen werden Gruppen verstanden, die noch frei und in einer unter den Schweißbedingungen reaktiven Form im Polymer einpolymerisiert / einreagiert vorliegen, wie freie Säure- oder OH-Gruppen. Unter dem Begriff "im Wesentlichen frei von" wird erfindungsgemäß verstanden, wenn das erste erfindungsgemäße im Primer enthaltene Polymer, insbesondere jedes Polymer im Primer, bevorzugt der Primer weniger als 1 Gew.-%, vorzugsweise weniger als 0,1 Gew.-%, ganz besonders bevorzugt weniger als 0,01 Gew.-%, ganz besonders bevorzugt keine dieser Gruppen enthalten.

Neben dem ersten erfindungsgemäßen Polymer und dem weiteren Polymer kann der Primer auch ein Lösungsmittel, insbesondere ein organisches Lösungsmittel enthalten. Vorzugsweise enthält der Primer einen Lösungsmittelgehalt von 10 - 90 Gew.-%, insbesondere 50 - 85 Gew.-%, besonders bevorzugt 60 - 80 Gew.-%, jeweils bezogen auf das Gesamtgewicht des Primers.

Geeignete Lösungsmittel sind alle gängigen Lösungsmittel, wie zum Beispiel Wasser, Alkohole, Ketone, wie Mehylisobutylketon (MIBK) oder Cyclohexanon (CH), Ether, wie Diethylether oder Tetrahydrofuran (THF), Ester, wie Essigsäureethylester, oder Carbonate, wie Dimethyl- oder Dipropylcarbonat, Toluol, Xylol oder Gemische daraus.

In einer bevorzugten Ausführungsform enthält der Primer organische Lösungsmittel. Besonders bevorzugte Lösungsmittel sind Lösungsmittel mit einem Dampfdruck bei 20 °C von 1 bis 600 hPa, insbesondere 2 bis 200 hPa, besonders bevorzugt 5 bis 20 hPa. Lösemittel mit einem entsprechenden Dampfdruck haben sich besonders vorteilhaft dabei herausgestellt, die Blasenbildung in der Primerschicht beim Abdampfen zu minimieren bzw. zu verhindern. Insbesondere bevorzugt enthält der Primer ein Lösungsmittel ausgewählt aus Tetrahydrofuran, Mehylisobutylketon, Cyclohexanon und Gemische daraus, besonders bevorzugt enthält der Primer Tetrahydrofuran oder eine Mischung aus Mehylisobutylketon und Cyclohexanon. Wenn eine Mischung aus Mehylisobutylketon und Cyclohexanon als Lösungsmittel eingesetzt wird, enthält diese Mischung vorzugsweise 10-50 Gew.-%, insbesondere 20-35 Gew.-% Cyclohexanon, jeweils bezogen auf die gesamte Mischung an Lösungsmittel.

Wenn organische Lösungsmittel eingesetzt werden, beträgt der Gesamtpolymergehalt des Primers vorzugsweise 10 - 90 Gew.-%, insbesondere 15 - 50 Gew.-%, besonders bevorzugt 20 - 40 Gew.-%, jeweils bezogen auf das Gesamtgewicht des Primers. Der Gesamtpolymergehalt entspricht dem Gehalt aller im Primer verwendeten Polymere, insbesondere der erfindungsgemäßen Copolymere und der oben beschriebenen weiteren Polymere.

In einer anderen bevorzugten Ausführungsform liegt der Primer in Form einer wässrigen Dispersion oder Emulsion vor. In diesem Fall ist das erfindungsgemäße Polymer bzw., wenn vorhanden, die weiteren Polymere in Wasser emulgiert oder dispergiert. In diesem Fall beträgt der Gesamtpolymergehalt des Primers vorzugsweise 5 - 90 Gew.-%, insbesondere 20 - 70 Gew.-%, besonders bevorzugt 30 - 55 Gew.-%, jeweils bezogen auf das Gesamtgewicht des Primers. Für die wässrige Dispersion/Emulsion ist es vorteilhaft, dass die Polymerkomponente im Wesentlichen nur aus dem erfindungsgemäßen Polymer und dem gegebenenfalls vorhandenen oben genannten weiteren Polymer, insbesondere nur aus dem erfindungsgemäßen Polymer besteht. Unter dem Begriff "im Wesentlichen aus" wird erfindungsgemäß verstanden, wenn die Polymerkomponente zu mehr als 95 Gew.-%, vorzugsweise mehr als 97 Gew.-%, ganz besonders bevorzugt mehr als 99 Gew.-% aus der erfindungsgemäßen Polymer und dem gegebenenfalls vorhandenen oben genannten weiteren Polymer, insbesondere nur aus dem erfindungsgemäßen Polymer besteht.

In einer anderen bevorzugten Ausführungsform der Primer im Wesentlichen frei von Lösungsmitteln.

Neben dem erfindungsgemäßen Copolymer, den oben genannten weiteren Polymeren und einem Lösungsmittel kann der Primer weitere Komponenten enthalten, wie zum Beispiel Füllstoffe, (Fluoreszenz)-Farbstoffe und Pigmente, rheologische Hilfsmittel, Entschäumungshilfen, Benetzungshilfsmittel, Stabilisatoren oder Weichmacher. Abgesehen von Farbstoffen und Pigmenten ist der Primer jedoch vorzugsweise im Wesentlichen frei von weiteren Komponenten, insbesondere im Wesentlichen frei von jeglichen anderen Komponenten. Unter dem Begriff "im Wesentlichen frei von" wird erfindungsgemäß verstanden, wenn der Primer weniger als 5 Gew.-%, vorzugsweise weniger als 1 Gew.-%, ganz besonders bevorzugt weniger als 0,1 Gew.-% der jeweiligen Substanzen, insbesondere nicht die jeweiligen Substanzen enthalten.

Bei dem erfindungsgemäßen Verfahren zum Verschweißen zweier unterschiedlicher Kunststoffe unter Verwendung eines Primers weisen die beiden zu fügenden Kunststoffe zueinander eine gewichtete quadratische Distanz der Hansen-Parameter $(R_a)^2$ von größer 22 MPa auf und der Primer enthält ein Polymer, welches zu beiden zu fügenden Kunststoffen eine gewichtete quadratische Distanz der Hansen-Parameter $(R_a)^2$ von kleiner 22 MPa aufweist.

Der Primer dient bei diesem Verfahren als Hilfsmittel für die Verschweißung der beiden unterschiedlichen Kunststoffe durch jeweiliges Aufschmelzen. Durch den verwendeten kompatiblen Primer kann eine Verträglichkeit zwischen den beiden Fügepartnern hergestellt werden, wodurch eine stabile und dauerhafte stoffschlüssige Verbindung zwischen den beiden Kunststoffen hergestellt werden kann.

Der Primer kann durch verschiedenste Verfahren auf die Oberfläche eines oder beider Fügepartner aufgetragen werden. So kann die Auftragung zum Beispiel durch eine Dosiervorrichtung, durch eine Nadel und Dosierroboter, durch Spritzgießen, durch Extrusion, durch Folienauftrag, durch Auftrag als Hotmelt, durch Aufsprühen, durch Aufstreichen oder durch Dippen erfolgen.

Bei dem Auftrag kann der Primer entweder nur auf eine Oberfläche oder auf beide Oberflächen der zu verschweißenden Substrate aufgetragen werden. Vorzugsweise wird der Primer nur auf eine Oberfläche aufgetragen. In dem Fall des Verschweißens mittels einer Folie wird die Folie zwischen die Substrate gelegt.

Für den Fall, dass der Primer Lösungsmittel enthält, wird der Primer nach dem Auftrag auf eine oder beide Oberflächen vorzugsweise so lange getrocknet bis das Lösungsmittel soweit verdampft ist, dass eine nicht klebrige, dimensionsstabile Primerschicht entstanden ist. Insbesondere ist der Primer bereits nach wenigen Sekunden und bis zu mehreren Wochen schweißbar. Vorzugsweise wird der Primer nach dem Auftrag für mindestens eine Stunde, bevorzugt für mindestens 12 Stunden getrocknet.

Vorzugsweise erfolgt der Auftrag auf eine oder beide Oberflächen der zu verschweißenden Substrate in der Weise, dass der Primer eine Schichtdicke von 1 $\mu$m bis 5000 $\mu$m, insbesondere 10-3000 $\mu$m, bevorzugt 50-1000 $\mu$m, besonders bevorzugt 100-500 $\mu$m hat. Falls ein Lösungsmittel im Primer enthalten war, bezieht sich die Schichtdicke auf den vom Lösemittel getrockneten Primer.

Nach dem Auftragen auf einen bzw. beide Oberflächen der zu verschweißenden Substrate und gegebenenfalls dem Trocknen des Primers können die zu verschweißenden Substrate mit einem gängigen Schweißverfahren miteinander verbunden werden. Das Schweißen von Kunststoffen erfolgt im Allgemeinen durch eine lokale Plastifizierung der Fügepartner in der Fügeebene und das Fügen unter Druck. Die Prozessparameter sind so zu wählen, dass ein ausgeprägtes Quetschfließen der Schmelze zu einer optimalen Verbindung der Fügepartner in der Fügeebene führt. Die Erwärmung kann über Konvektion, Kontakterwärmung, Strahlung oder Reibung erfolgen. Der unterschiedliche Energieeintrag zum Plastifizieren kann auf vielfältige Art und Weise erfolgen und hat zu verschiedenen Prozessen zum Schweißen von Kunststoffen geführt. Geeignete Schweißverfahren sind beispielsweise:

- Heißgasschweißen [HG](Hot gas welding)
  Konvektive Erwärmung mit einem heißen Gasstrom, im allgemeinen Luft, zweistufiger Prozess
- Heizelementschweißen [HE] (Hot plate welding)
  Kontakterwärmung, zweistufiger Prozess
- Ultraschallschweißen [US] (Ultrasonic welding)
  Erwärmung durch Reibung, eine transversale Welle im Ultraschallbereich führt zu einer Erwärmung in der Grenzschicht, einstufiger Prozess
- Hochfrequenzschweißen [HF] (High frequency welding)
  Erwärmung durch innere Reibung, polare Moleküle orientieren sich entsprechen eines hochfrequenten Magnetfelds, einstufig, nur für polare Kunststoffe und Folien eingesetzt
- Vibrationsschweißen [VIB] (Friction welding: Linear; Orbital; Spin; Angle)
  Erwärmung durch Reibung, einstufiger Prozess
- Laserschweißen [LW] (Laser welding: Kontur, Simultan, Quasisimultan, Maske)
  Erwärmung durch Strahlung, Strahlung kohärent, Lasertransmissionsschweißen, im Allgemeinen einstufig (zweistufig möglich)
- Infrarotschweißen [IR] (Infrared welding)
  Erwärmung über Strahlung, Strahlung inkohärent, zweistufig

Die oben angeführten Schweißverfahren können gegebenenfalls auch kombiniert werden wie zum Beispiel das Infrarotschweißen mit dem Vibrationsschweißen. Besonders bevorzugt erfolgt das Verschweißen des Polyamid-Kunststoffes mit dem Poly(meth)acrylat-Kunststoff durch ein Schweißverfahren ausgewählt aus Heizelementschweißen, Wärmekontakt- oder Wärmeimpulsschweißen, Warmgas- oder Heissgasschweißen, Vibrationsschweißen, Mikrowellen- oder Induktionsschweißen. Laserstumpf- oder Laserdurchstrahlschweißen, Infrarotschweißen, Ultraschallschweißen, sowie Kombinationen daraus, insbesondere ausgewählt aus Heizelementschweißen, Infrarotschweißen, Ultraschallschweißen, Vibrationsschweißen, sowie Kombinationen daraus.

Besonders bevorzugt ist ein Verfahren zum stoffschlüssigen Fügen der zwei Kunststoffe unter Verwendung des Primers, beinhaltend die folgenden Schritte.

- Bereitstellen des ersten Kunsstoffes aufweisend eine erste Fügezone,
- Bereitstellen des zweiten Kunsstoffes aufweisend eine zweite Fügezone,
- Vorwärmen der ersten Fügezone,
- Auftragen des Primers auf die vorgewärmte erste Fügezone, insbesondere bei lösungsmittelfreien Primern,
- In-Kontakt-bringen der mit dem Primer versehenen ersten Fügezone mit der zweiten Fügezone,

- Stoffschlüssiges Verbinden der ersten Fügezone mit der zweiten Fügezone insbesondere durch den Einsatz üblicher Schweißverfahren von Kunststoffen wie beispielsweise dem Infrarotschweißen, Heizelementschweißen, Warmgasschweißen, Vibrationsschweißen, Ultraschallschweißen.

Für das Schweißen von Kunststoffen kann allgemein das Verständnis der DIN 1910-3:1977-09 angewendet werden. Mithin kann darunter ein stoffschlüssiges Verbinden von thermoplastischen Kunststoffen unter Zuhilfenahme von Wärme oder/und Druck verstanden werden. Die Erwärmung kann beispielsweise auf Basis von Kontakterwärmung (Schweißen durch festen Körper), Konvektionserwärmung (Schweißen durch Warmgas), Strahlungserwärmung (Schweißen durch Strahl) und Erwärmung durch Reibung (Schweißen durch Bewegung) sowie das Schweißen durch elektrischen Strom erfolgen.

In einer vorteilhaften Weiterbildung kommt ein Primer zum Einsatz, der derart ausgewählt und auf das Verfahren abgestimmt ist, dass das Auftragen auf eine erwärmte und/oder heiße Fügezone mit einer Temperatur, die kleiner ist als die Zersetzungstemperatur der Polymere im Primer, keinen Einfluss auf die innere chemische Vernetzung des Primers hat.

Vorteilhaft ist es, die erste Fügezone des ersten Kunststoffes vorzuwärmen. Für das Vorwärmen können dem Fachmann bekannte und sich für den Einsatzzweck eignende Hilfsmittel und Techniken zum Einsatz kommen. Insbesondere eignet sich der Einsatz von Warmgas oder Plasma zur Vorwärmung. Denkbar ist auch eine Vorwärmung mittels Bestrahlung, insbesondere Infrarotstrahlung oder Laserstrahlung. Auch kann ein Heizelement oder ein beheiztes Werkzeug zum Einsatz kommen, um die erste Fügezone vorzuwärmen. Schließlich ist auch ein Vorwärmen in einem Ofen oder einem beheizten Raum denkbar. Denkbar ist eine Vorwärmung des gesamten Kunststoffes und somit auch besagter Fügezone. Alternativ oder zusätzlich ist aber auch eine Vorwärmung lediglich der Fügezone selbst möglich.

In einer vorteilhaften Weiterbildung liegt der Abstand der Heizvorrichtung während der Vorwärmung zum Kunststoff, insbesondere zur vorzuwärmenden ersten Fügezone, insbesondere des wärmeabgebenden Bereichs der Heizvorrichtung oder des wärmeauslösenden Bereichs der Heizvorrichtung oder der zur vorzuwärmenden wirksamen Oberfläche der Heizvorrichtung oder die hinsichtlich der ersten Fügezone gegenüberliegenden Bereich der Heizvorrichtung in einem Bereich von 0,5 mm bis 100 mm, vorzugsweise im Bereich von 1 mm bis 60 mm. Denkbar ist alternativ auch, dass eine Erwärmung durch und/oder bei Kontaktierung insbesondere der ersten Fügezone durch das Heizelement der Heizvorrichtung erfolgt.

Ein weiterer Vorteil ist die Auswahl des Kunststoffes für den ersten Fügepartner und die Einstellung der Verfahrensparameter auf den ersten Kunststoff derart, dass die erste Fügezone beim Vorwärmen aufgeschmolzen wird und dass beim Vorwärmen eine Schmelzeschicht in der ersten Fügezone erzeugt wird. Die Dicke der Schmelzeschicht liegt in einer bevorzugten Ausführungsform vorzugsweise im Bereich von 0,05 mm bis 6 mm, besonders bevorzugt im Bereich von 0,1 mm bis 5 mm. Eine derartige Schmelzeschicht kann zu einer besseren Adhäsion und/oder Diffusion und/oder Wechselwirkung der Moleküle führen und in Verbindung mit einem gewissen Fluss zu einer besseren Verbindungsschicht. Befindet sich die Grenzschicht des ersten Kunststoffs im schmelzeflüssigen Zustand, kann es mit dem Primer zu Wechselwirkungen bis hin zu chemischen Bindungen kommen. Die Schmelzschicht kann insbesondere abhängig sein von der Bauteilgeometrie und der jeweiligen Bauteilauslegung. Vorzugsweise sind die Verfahrensparameter derart eingestellt und/oder gewählt, dass es zu keiner Verformung der Bauteile kommt. Bevorzugt ist ein Ausgleich von Temperaturunterschieden zwischen der Fügezone und dem aufzutragenden Primer durch geeignete Maßnahmen und/oder Verfahrensschritte vorgesehen. Dabei ist es insbesondere denkbar den Primer vorzuwärmen, um den Temperaturunterschied zwischen dem vorzugsweise thermoplastischen Primer und der ersten Fügezone zu reduzieren. Dies kann beispielsweise der schnellen Abkühlung der ersten Fügezone zwischen den Prozessschritten entgegenwirken.

Optional erfolgt vorzugsweise vor dem Schritt des Vorwärmens der ersten Fügezone eine Vorbehandlung der ersten Fügezone. Alternativ oder zusätzlich kann auch eine Vorbehandlung der zweiten Fügezone erfolgen. Als mögliche Vorbehandlung ist beispielsweise das Reinigen mittels eines Lösungsmittels oder eines beispielsweise alkalischen Kunststoffreinigers denkbar. Auch kann eine mechanische Vorbehandlung zum Einsatz kommen, insbesondere mittels Kratzen, Schmirgeln, Bürsten oder Strahlen. Denkbare chemische Vorbehandlungen sind insbesondere das Beizen oder der Einsatz reaktiver Gase. Darüber hinaus könnte sich der Einsatz einer thermischen, chemischen oder/und physikalischen Vorbehandlung als zweckmäßig erweisen, insbesondere mittels Gasflamme oder Plasmabogen. Alternativ oder zusätzlich kann eine elektrische Vorbehandlung mittels Corona-entladung, bei der die erste Fügezone und/oder die zweite Fügezone einer elektrischen Corona-entladung ausgesetzt wird damit an der entsprechenden Oberfläche polare Moleküle entstehen. Eine weitere Möglichkeit ist die Plasmabehandlung, vorzugsweise unter Einsatz einer Plasmadüse für die Vorbehandlung der Fügezone, insbesondere um eine Aktivierung und/oder Reinigung der entsprechenden Oberfläche zu erreichen. Gleichwohl kann sich auch eine Beschichtung mittels Plasma als zweckmäßig erweisen. Eine weitere Möglichkeit ist das Beflammen der Fügezone zur Erhöhung der Oberflächenspannung bei geeigneten Kunststoffen. Eine weitere Art der Vorbehandlung ist die Bestrahlung mittels UV-Strahlen, Elektronenstrahlen, radioaktiven Strahlen oder mittels Laser. Schließlich kann die Vorbehandlung in Form einer Beschichtung erfolgen, insbesondere durch einen Anstrich oder einen Haftvermittler. Denkbar ist auch eine Vorbehandlung des ersten Kunststoffes oder der Fügezonen des ersten Kunststoffes in einem größeren zeitlichen Abstand vor dem Vorwärmen. So ist beispielsweise denkbar, die Vorbehandlung schon im Rahmen des Fertigungsprozesses des ersten Kunststoffes vorzunehmen, um im erfindungsgemäßen Verfahren den vorbehandelten Kunststoff weiterverarbeiten zu können.

Der Auftrag des Primers ist auf unterschiedliche Art und Weise denkbar. Beispielsweise und insbesondere im industriellen Bereich ist der Auftrag mittels einer automatisierten Auftragshilfe, insbesondere mittels eines Dosierroboters denkbar. Selbiger kann dabei mit einem Nadel und/oder einem Höhensensor ausgerüstet sein, um komplexe Dosierungen durchführen zu können. Auch kann der Auftrag des Primers mittels Spritzgießen erfolgen, indem der Primer in einer Spritzgießmaschine plastifiziert und in die der erste Kunststoff mit der ersten Fügezone enthaltende Form unter Druck eingespritzt wird. Alternativ ist ein Folienauftrag denkbar, wobei in einem ersten Schritt mittels Folienblasen oder Flachfolienextrusion zunächst eine Folie aus dem Primer hergestellt wird. Anschließend kann die Folie beispielsweise mittels eines Schneid- oder Stanzverfahrens in eine beliebige Form zugeschnitten und in einem weiteren Schritt nach dem genannten Vorwärmen auf die erste Fügezone aufgebracht werden. Hierbei hat sich der Einsatz von Folien/Platten mit einer Stärke im Bereich von 1 $\mu$m - 5000 $\mu$m als zweckmäßig erwiesen. Weitere denkbare Auftragsmöglichkeiten sind das Extrusionsschweißen, bei dem der Primer in Form eines Schweißdrahtes vorliegt oder in einem Extruder aufgeschmolzen und in Schmelze auf die erste Fügezone appliziert werden kann. Auch ist die Bereitstellung des Primers in Form eines Schweißdrahtes möglich, um eine Applikation mittels Heißluftschweißen zu ermöglichen. Eine weitere Möglichkeit ist das Aufbringen des Primers mittels eines Sprühverfahrens. Auch beim Aufbringen beim Spritzguss ist eine Vorbehandlung oder/und Vorwärmung und/oder lokal unterschiedliche Temperierung des Spritzgießwerkzeug möglich. Selbstverständlich sind auch andere, dem Fachmann bekannte und sich für den spezifischen Anwendungsfall eignende Auftragsarten denkbar.

Ein weiterer Vorteil ist die weitere Erwärmung oder Erwärmung der ersten Fügezone während des Auftrags des Primers, insbesondere um einen Temperaturabfall der ersten Fügezone zwischen dem Vorwärmen und dem Auftragen des Primers zu vermeiden. Dies kann durch den oben beschriebenen Verfahrensschritt zum Vorwärmen erfolgen, welcher der Einfachheit halber während des Auftrags fortgeführt werden kann. Alternativ oder zusätzlich ist eine zusätzliche Erwärmung insbesondere mittels eines weiteren Verfahrensschrittes möglich. So kann sich beispielsweise als zweckmäßig erweisen, ein simultanes Erwärmen der ersten Fügezone durchzuführen, beispielsweise mittels simultanen Bestrahlens der ersten Fügezone mit Strahlung, erzwungene Konvektion, Kontakterwärmung während des Auftrages, um einen Temperaturabfall der ersten Fügezone nach dem Vorwärmen zu vermeiden.

In einer vorteilhaften Weiterbildung wird der Primer derart aufgebracht, das eine Verbindungsschicht mit einer Dicke im Bereich von 1 $\mu$m bis 5 mm, vorzugsweise im Bereich von 10 $\mu$m bis 3 mm auf der erste Fügezone angeordnet ist. Unter der Dicke der Verbindungsschicht ist dabei die Materialdicke der Verbindungsschicht auf der ersten Fügezone zu verstehen.

Ein weiterer Vorteil ist das Auftragen des Primers mittels einer Dosiervorrichtung auf die erste Fügezone unter Relativbewegung zwischen erster Fügezone und der Dosiervorrichtung, wobei mittels einer Heizvorrichtung die erste Fügezone, auf welche der Primer aufgetragen wird, unter Relativbewegung zwischen erster Fügezone und Heizvorrichtung, vor dem Auftrag des Primers vorgewärmt wird, wobei der Auftrag des Primers über die Dosiervorrichtung im vorgewärmten Zustand der ersten Fügezone erfolgt.

Hierbei hat es sich als besonders vorteilhaft erwiesen, dass die Heizvorrichtung bei der Vorwärmung an der ersten Fügezone mit einer Geschwindigkeit im Bereich von 10 mm/min bis 100 m/min, vorzugsweise im Bereich von 10 mm/min bis 30 m/min vorbeigeführt wird.

Ferner kann es von Vorteil sein, dass die Heizvorrichtung der Dosiervorrichtung vorzugsweise in einem definierten und konstanten Abstand voreilt. Insbesondere ist eine derartige Durchführung des Verfahrens von Vorteil, bei der der Primer mittels einer Dosiervorrichtung auf die erste Fügezone unter Relativbewegung von Dosiervorrichtung und erster Fügezone im Bereich von 10 mm/min bis 100 m/min, vorzugsweise im Bereich von 10 mm/min bis 30 m/min aufgetragen wird, wobei mittels einer Heizvorrichtung besagte Fügezone, auf welche der Primer aufgetragen wird, unter Relativbewegung von Heizvorrichtung und erster Fügezone vor dem Auftrag des Primers vorgewärmt wird, wobei die Heizvorrichtung der Dosiervorrichtung oder einer Düse der Dosiervorrichtung zum Auftragen des Primers in einem zeitlichen Abstand im Bereich von 0,1-10 s vorzugsweise simultan voreilt.

Hierbei hat es sich als besonders vorteilhaft erwiesen, eine Beschichtungseinheit bestehend aus Dosiervorrichtung und Heizvorrichtung einzusetzen. Unter einer Beschichtungseinheit kann dabei insbesondere eine Einheit verstanden werden, die eine feste Verbindung von Heizvorrichtung und Dosiervorrichtung vorsieht, so dass die Heizvorrichtung der Dosiervorrichtung in vorzugsweise einem definierten und konstanten Abstand bei der Relativbewegung voreilt, um sicherzustellen, dass die erste Fügezone unmittelbar vor dem Auftrag des Primers vorgewärmt wird. Selbstverständlich ist hierbei auch eine Einstellbarkeit des Abstandes oder bei konvektiver Vorwärmung das Einstellen des Volumenstroms bzw. Düsendurchmessers des Mediums, insbesondere durch geeignete mechanische, elektromechanische oder auch pneumatisch betriebene Stellmittel denkbar.

Andererseits kann unter der Beschichtungseinheit auch eine Heizvorrichtung und eine Dosiervorrichtung als zwei völlig voneinander getrennte oder separierte Baugruppen verstanden werden, die jedoch die gleiche oder im Wesentlichen die gleiche Relativbewegung hinsichtlich des Kunststoffes eingehen, um sicherzustellen, dass der Auftragsort des Primers unmittelbar vor dem Auftrag des Primers vorgewärmt wird.

In einer vorteilhaften Weiterbildung gehen Heizvorrichtung und Dosiervorrichtung eine zwar im Wesentlichen gleiche primäre Relativbewegung oder Grundrichtung hinsichtlich des Kunststoffes ein, jedoch erfährt zumindest eine von beiden genannten Vorrichtungen zusätzlich zur besagten primären Relativbewegung eine zusätzliche Relativbewegung hinsichtlich des Kunststoffes. So kann beispielsweise die Heizvorrichtung und/oder die Dosiervorrichtung neben der primären Relativbewegung, in der beispielsweise auch der Auftrag des Primers erfolgen kann, eine oder mehrere sekundäre Relativbewegungen eingehen. Beispielsweise kann insbesondere die Heizvorrichtung und/oder die Dosiervorrichtung eine um die primäre Relativbewegung kreisende oder mäanderförmige sekundäre Relativbewegung eingehen oder erfahren.

Dabei kann der Kunststoff auf der einen Seite oder die Heizvorrichtung und Dosiervorrichtung oder beide Vorrichtungen zusammen als Beschichtungseinheit auf der anderen Seite bewegt werden. Dabei ist es möglich, dass die Heizvorrichtung und Dosiervorrichtung oder beide Vorrichtungen zusammen als Beschichtungseinheit auf der einen Seite bzw. der Kunststoff auf der anderen Seite stillstehen oder jeweils mit dem sich bewegenden Teil in abweichende Richtung bewegt werden.

In einer vorteilhaften Weiterbildung erfolgt eine primäre Relativbewegung in einer Geschwindigkeit in einem Bereich von 10 mm/min bis 100 m/min, vorzugsweise im Bereich von 10 mm/min bis 30 m/min, so dass beispielsweise insbesondere auch durch geeignete Gestaltung der Heizvorrichtung möglichst kurze Verweilzeiten des Kunststoffes innerhalb der Heizfläche der Heizvorrichtung ergeben, insbesondere in einem Bereich von 1-60 s. Hierunter kann der Bereich bzw. der Raum um die Heizvorrichtung verstanden werden, der einen Einfluss auf die Temperatur im Sinne einer Temperaturerhöhung, also einer Vorwärmung der ersten Fügezone des ersten Kunststoffes hat. So kann beispielsweise eine zu große Aufheizung und eine Kunststoffschädigung oder Kunststoffbeeinträchtigung vermieden werden.

Zudem kann es sich als vorteilhaft erweisen, insbesondere zur Anbindung der Dosiervorrichtung und/oder der Heizvorrichtung an/in bestehende Fertigungslinien, die Heizvorrichtung mit einer Busschnittstelle auszustatten, insbesondere eines Profibus, oder einer Realtime-Ethernet-Schnittstelle.

Nach dem Aufbringen besagten Primers ist vorgesehen, die zweite Fügezone mit der Primerschicht in Kontakt zu bringen. Hierbei kann sich eine Fixierung beider Kunststoffe zueinander als zweckmäßig erweisen, insbesondere mittels dem Fachmann bekannter Spannvorrichtungen oder ähnlicher Hilfsmittel zur Fixierung.

Natürlich kann optional vor dem Schritt des In-Kontakt-Bringens der zweiten Fügezone mit der Primerschicht eine Vorbehandlung der zweiten Fügezone erfolgen. Dabei sind insbesondere alle oberhalb beschriebenen Techniken für eine Vorbehandlung denkbar. Denkbar ist auch eine Vorbehandlung des zweiten Kunststoffes oder der Fügezonen des zweiten Kunststoffes in einem größeren zeitlichen Abstand vor dem In-Kontakt-Bringen. So ist beispielsweise denkbar, die Vorbehandlung schon im Rahmen des Fertigungsprozesses des zweiten Kunststoffes vorzunehmen, um im erfindungsgemäßen Verfahren einen vorbehandelten Kunststoff weiterverarbeiten zu können. Die Vorbehandlung des zweiten Kunststoffes kann auch den Auftrag des Primers auf die zweite Fügezone beinhalten. Dabei ist vorzugsweise auch eine Vorwärmung der zweiten Fügezone vor dem Auftrag des Primers denkbar. Die obigen Ausführungen sind an dieser Stelle ebenfalls bevorzugt.

Es schließt sich an das oberhalb beschriebene In-Kontankt-bringen von zweiter Fügezone und Primer ein Fügeprozess an, in dem die behandelten und/oder beschichteten Fügepartner durch Wärmezufuhr plastifiziert und vorzugsweise unter Einwirkung von Druck miteinander stoffschlüssig verbunden werden. Denkbar ist für diese stoffschlüssige Verbindung der zweiten Fügezone mit dem Primer der Einsatz einer Wärmezufuhr mittels Wärmeleitung, beispielsweise mittels Heizelementschweissen und/oder Wärmekontaktschweißen und/oder Wärmeimpulsschweißen; durch Reibung, insbesondere Ultraschall-, Reib-/Vibrations- oder Hochfrequenzschweissen; Mikrowellen- oder Induktionsschweißen; durch Konvektion, wie beispielsweise Warmgas- oder Heissgasschweissen; mittels Strahlung, beispielsweise Infrarot-, Laserstumpf- oder Laserdurchstrahlschweissen oder auch durch Kombination zweier oder mehrerer dieser Techniken. Ein weiterer Gegenstand dieser Erfindung sind gemäß dem erfindungsgemäßen Verfahren hergestellte Gegenstände bzw. Produkte.

Außerdem ist Gegenstand dieser Erfindung die Verwendung eines erfindungsgemäßen Primers zur Verschweißung von zwei unterschiedlichen Kunststoffen.

Ausführungsbeispiele

Ausgewählte Materialien und Hansen-Parameter

| | | $\delta_D$ [$\sqrt{MPa}$] | $\delta_P$ [$\sqrt{MPa}$] | $\delta_H$ [$\sqrt{MPa}$] |
|---|---|---|---|---|
| Kunststoff 1 | Polyamid 12 | 16,7 | 5 | 5 |
| Kunststoff 2 | Styrol-Butadien-Acrylat-Copolymer | 17,5 | 3,35 | 0,75 |
| Primer-Polymer | Phenylenether | 16,6 | 3,1 | 2,7 |

Für die beiden Kunststoffe Polyamid 12 und Styrol-Butadien-Acrylat-Copolymer aus ergibt sich für $(R_a)^2$ gemäß $4(\delta_{D1} - \delta_{D2})^2 + (\delta_{P1} - \delta_{P2})^2 + (\delta_{H1} - \delta_{H2})^2$ ein Wert von 23,3 MPa.

Für das Primer-Polymer Phenylenether und dem Kunststoff 1, Polyamid 12 ergibt sich für $(R_a)^2$ ein Wert von 8,9 MPa.

Für das Primer-Polymer Phenylenether und dem Kunststoff 2, Styrol-Butadien-Acrylat-Copolymer ergibt sich für $(R_a)^2$ ein Wert von 7,1 MPa.

Durch die Verwendung des Primer-Polymers Phenylenether konnten die beiden genannten Kunststoffe miteinander kompatibilisiert werden, um diese zu schweißen.

**Patentansprüche**

1. Verfahren zum Verschweißen von zwei unterschiedlichen Kunststoffen unter Verwendung eines Primers, **dadurch gekennzeichnet, dass** die beiden zu fügenden Kunststoffe zueinander eine gewichtete quadratische Distanz der Hansen-Parameter $(R_a)^2$ von größer 22 MPa aufweisen und der Primer ein Polymer enthält, welches zu beiden zu fügenden Kunststoffen eine gewichtete quadratische Distanz der Hansen-Parameter $(R_a)^2$ von kleiner 22 MPa aufweist.

2. Verfahren zum Verschweißen nach Anspruch 1, **dadurch gekennzeichnet, dass** die zwei unterschiedlichen Kunststoffe zueinander eine gewichtete quadratische Distanz der Hansen-Parameter $(R_a)^2$ von größer 25 MPa, insbesondere von größer 30 MPa, besonders bevorzugt von größer 35 MPa aufweisen.

3. Verfahren zum Verschweißen nach Anspruch 1 oder 2, **dadurch gekennzeichnet, dass** die zu fügenden Kunststoffe zu mehr als 40 Gew.-%, insbesondere zu mehr als 60 Gew.-%, vorzugsweise zu mehr als 70 Gew.-%, bevorzugt zu mehr als 90 Gew.-% jeweils aus mindestens einem Polymer bestehen, jeweils bezogen auf den gesamten Kunststoff.

4. Verfahren zum Verschweißen nach einem der Ansprüche 1 bis 3, **dadurch gekennzeichnet, dass** das Polymer des Primers zu beiden Kunststoffen eine gewichtete quadratische Distanz der Hansen-Parameter $(R_a)^2$ von kleiner 17 MPa, bevorzugt von kleiner 15 MPa, besonders bevorzugt von kleiner 12 MPa aufweist.

5. Verfahren zum Verschweißen nach einem der Ansprüche 1 bis 4, **dadurch gekennzeichnet, dass** der Primer ein weiteres Polymer enthält, welches vorzugsweise zu einem, insbesondere zu beiden zu fügenden Kunststoffen und insbesondere auch zu dem ersten Polymer des Primers eine gewichtete quadratische Distanz der Hansenparameter $(R_a)^2$ von kleiner 22 MPa, insbesondere von kleiner 17 MPa, bevorzugt von kleiner 15 MPa, besonders bevorzugt von kleiner 12 MPa aufweist.

6. Verfahren zum Verschweißen nach Anspruch 5, **dadurch gekennzeichnet, dass** der Gehalt des weiteren Polymeres am Primer 1 - 40 Gew.-%, insbesondere 5 - 30 Gew.-%, besonders bevorzugt 10 - 20 Gew.-%, jeweils bezogen auf das Gesamtgewicht des Primers, beträgt oder der Primer kein weiteres Polymer enthält.

7. Verfahren zum Verschweißen nach einem der Ansprüche 1 bis 6, **dadurch gekennzeichnet, dass** das im Primer enthaltene Polymer, insbesondere jedes Polymer im Primer, bevorzugt der Primer, im Wesentlichen frei von Maleinsäureanhydrid-Gruppen und/oder Amin-Gruppen, insbesondere im Wesentlichen frei von Säure-Gruppen, Säureanhydrid-Gruppen, Amin-Gruppen und/oder Hydroxyl-Gruppen, vorzugsweise im Wesentlichen frei von Säure-Gruppen, Säureanhydrid-Gruppen, Hydroxyl-Gruppen, Thiol-Gruppen, Amin-Gruppen, Epoxid-Gruppen und/oder Isocyanat-Gruppen, bevorzugt im Wesentlichen frei von jeglichen reaktiven Gruppen ist.

8. Verfahren zum Verschweißen nach einem der Ansprüche 1 bis 7, **dadurch gekennzeichnet, dass** der Primer mindestens ein Lösungsmittel, insbesondere mindestens ein organisches Lösungsmittel enthält, wobei der Primer vorzugsweise einen Lösungsmittelgehalt von 10 - 90 Gew.-%, insbesondere 50 - 85 Gew.-%, besonders bevorzugt 60 - 80 Gew.-%, jeweils bezogen auf das Gesamtgewicht des Primers, aufweist.

9. Verfahren zum Verschweißen nach Anspruch 8, **dadurch gekennzeichnet, dass** das mindestens eine Lösungsmittel einen Dampfdruck bei 20 °C von 1 bis 600 hPa, insbesondere 2 bis 200 hPa, besonders bevorzugt 5 bis 20 hPa aufweist, vorzugsweise das Lösungsmittel ausgewählt ist aus der Gruppe aus Tetrahydrofuran, Mehylisobutylketon, Cyclohexanon und Gemischen daraus.

10. Gegenstand hergestellt nach einem Verfahren zum Verschweißen gemäß einem der Ansprüche 1-9.

11. Verwendung eines Primers in einem Verfahren gemäß einem der Ansprüche 1-9 zur Verschweißung zweier unterschiedlicher Kunststoffe.

Europäisches
Patentamt

European
Patent Office

Office européen
des brevets

**EUROPÄISCHER RECHERCHENBERICHT**

Nummer der Anmeldung

EP 15 19 0205

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2006 054936 A1 (HELLA KGAA HUECK & CO [DE]) 29. Mai 2008 (2008-05-29) <br> * Absatz [0005] - Absatz [0008] * <br> * Absatz [0020] - Absatz [0021]; Ansprüche 1,2,10 * <br> ----- | 1-11 | INV. <br> B29C65/00 <br> C08J5/12 |
| A | JUHL THOMAS BROKHOLM ET AL: "Predicting the laser weldability of dissimilar polymers", <br> POLYMER, ELSEVIER SCIENCE PUBLISHERS B.V, GB, <br> Bd. 54, Nr. 15, 31. Mai 2013 (2013-05-31), Seiten 3891-3897, XP028574991, <br> ISSN: 0032-3861, DOI: <br> 10.1016/J.POLYMER.2013.05.053 <br> * das ganze Dokument * <br> ----- | 1-11 | |
| A | WO 2007/109855 A1 (CRC FOR ADVANCED COMPOSITE STR [AU]; BEEHAG ANDREW [AU]; JACKSON ADRIA) <br> 4. Oktober 2007 (2007-10-04) <br> * Ansprüche 1-29; Abbildungen 1-6 * <br> ----- | 1-11 | |
| A | WO 03/011573 A1 (COOPERATIVE RES CT FOR ADVANCE [AU]; HOU MENG [AU]; BEEHAG ANDREW [AU]) 13. Februar 2003 (2003-02-13) <br> * Ansprüche 1-29; Abbildungen 1-4 * <br> ----- | 1-11 | |

**RECHERCHIERTE SACHGEBIETE (IPC)**

B29C
C08J

Der vorliegende Recherchenbericht wurde für alle Patentansprüche erstellt

| Recherchenort | Abschlußdatum der Recherche | Prüfer |
|---|---|---|
| München | 15. April 2016 | Espen, Josée |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 19 0205

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-2016

| Im Recherchenbericht angeführtes Patentdokument | Datum der Veröffentlichung | Mitglied(er) der Patentfamilie | Datum der Veröffentlichung |
|---|---|---|---|
| DE 102006054936 A1 | 29-05-2008 | KEINE | |
| WO 2007109855 A1 | 04-10-2007 | AU 2007231551 A1 | 04-10-2007 |
| | | EP 2004388 A1 | 24-12-2008 |
| | | JP 5017358 B2 | 05-09-2012 |
| | | JP 2009531194 A | 03-09-2009 |
| | | KR 20090012228 A | 02-02-2009 |
| | | TW 200806459 A | 01-02-2008 |
| | | US 2010173161 A1 | 08-07-2010 |
| | | WO 2007109855 A1 | 04-10-2007 |
| WO 03011573 A1 | 13-02-2003 | AT 373688 T | 15-10-2007 |
| | | CN 1537047 A | 13-10-2004 |
| | | DE 60222566 T2 | 12-06-2008 |
| | | EP 1423256 A1 | 02-06-2004 |
| | | ES 2294149 T3 | 01-04-2008 |
| | | JP 4434731 B2 | 17-03-2010 |
| | | JP 2004535960 A | 02-12-2004 |
| | | KR 20040047782 A | 05-06-2004 |
| | | TW I269702 B | 01-01-2007 |
| | | US 2004231790 A1 | 25-11-2004 |
| | | US 2009246548 A1 | 01-10-2009 |
| | | WO 03011573 A1 | 13-02-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CHARLES M. HANSEN.** Hansen Solubility Parameters: A User's Handbook. Taylor & Francis Group, 2007